Europäisches Patentamt

(19) European Patent Office

Office européen des brevets

(11) Publication number: **0 002 866**
**B1**

(12) **EUROPEAN PATENT SPECIFICATION**

(45) Date of publication of patent specification: 08.07.81

(21) Application number: 78200376.8

(22) Date of filing: 18.12.78

(51) Int. Cl.³: **C 08 F 283/00,**
C 08 L 67/06,
C 08 G 63/52,
C 08 G 63/46,
C 08 G 63/20, C 09 D 3/64

(54) Process for coating a substrate with a radiation curable coating composition.

(30) Priority: 21.12.77 NL 7714169

(43) Date of publication of application:
11.07.79 Bulletin 79/14

(45) Publication of the grant of the European patent:
08.07.81 Bulletin 81/27

(84) Designated Contracting States:
BE CH DE FR GB NL SE

(56) References cited:
DE - A - 2 544 594

(73) Proprietor: Akzo N.V.
Ijssellaan 82
NL-6826 DW Arnhem (NL)

(72) Inventor: Wareman, Daniël
Verbeekhof 31
NL-4661 GN Halsteren (NL)
Inventor: Hemke, Gerrit Jan Klaas
Hamiltonlaan 11
NL-4631 NX Hoogerheide (NL)

(74) Representative: Sieders, René et al,
P.O. Box 314
NL-6800 AH Arnhem (NL)

Courier Press, Leamington Spa, England.

Process for coating a substrate with a radiation curable coating composition.

The invention relates to a process for coating a substrate by applying to it a radiation curable coating composition based on an acryloyl groups- and/or methacryloyl group-containing polyester resin and vinyl monomer and curing said composition by ionizing radiation.

A process of the type indicated above is known from British Patent Specification 1 286 591, in which use is made of ionizing radiation by an electron beam and there is no need for the presence of a photoinitiator. When, however, use is made of ionizing radiation by untraviolet light, the man skilled in the art will usually include a photoinitiator in the coating composition. A disadvantage to the aforementioned binder is that the resin is as a rule insufficiently soluble in the normally employed monomeric compound(s). Moreover, the cured layer of the binder will generally show surface irregularities such as craters and it is often insufficiently flexible.

The present invention has for its object to provide in improved binder, as a result of which the above-described drawbacks are obviated and the film obtained has an attractive appearance and considerable body.

The process according to the invention is characterized in that the polyester resin is build up from 5—65% by weight of an aliphatic monocarboxylic acid having 5—18 carbon atoms and contains an ethylenic unsaturation, provided by acryloyl and/or methacryloyl groups, of 0,2 to 7 equivalents of double bonds per kilogramme. The invention also relates to a process for the preparation of the above-envisaged radiation curable coating composition. The polyester resin to be used according to the present invention is referred to hereinafter as alkyd resin.

For completeness sake mention should also be made to the German Patent Application 2 544 594 describing ethylenically unsaturated polyester compositions containing an oxygen-blocking agent, the ethylenic unsaturation being provided by an $\alpha,\beta$-ethylenically unsaturated dicarboxylic acid, such as maleic acid or fumaric acid. To obtain a uniform, mat, cured coating without showing any structure in spite of the presence of an oxygen-blocking agent such as paraffin or wax the polyester must also contain 0,15 to 0,7 moles of an aliphatic, cycloaliphatic or aromatic monocarboxylic acid per mole of the $\alpha,\beta$-ethylenically unsaturated dicarboxylic acid.

The preparation of the alkyd resin may be carried out in the presence of generally one or more aliphatic and/or cycloaliphatic mono-, di-, and/or polyvalent alcohols, one or more aliphatic, cycloaliphatic and/or aromatic di- or polyvalent carboxylic acids, acrylic acid and/or methacrylic acid or derivatives thereof and one or more other suitable monovalent carboxylic acids and/or esters thereof. As examples of suitable alcohols may be mentioned lauryl alcohol, benzyl alcohol, cyclohexanol, ethylene glycol, propylene glycol, neopentyl glycol, 1,6-hexane diol. 2,2-bis(4-hydroxycyclohexyl)-propane, 2,2-bis(p-phenyleneoxyethanol)-propane, 2,2-bis(p-phenyleneoxy-2-propanol)-propane, diethylene glycol, glycerol, trimethylol ethane, trimethylol propane, pentaerythritol and/or dipentaerythritol and/or the corresponding epoxy compounds. As examples of suitable di-or polyvalent carboxylic acids may be mentioned maleic acid, fumaric acid, itaconic acid, citraconic acid, malonic acid, succinic acid, glutaric acid, adipic acid, azelaic acid, sebacic acid, tetrahydrophthalic acid, hexahydrophthalic acid, endomethylene tetrahydrophthalic acid, o-phthalic acid dichlorophthalic acid, hexachloro-endomethylene tetrahydrophthalic acid, isophthalic acid, terephthalic acid, trimellitic acid and/or pyromellitic acid.

If desired, the carboxylic acid also may be used in the form of an anhydride, for instance maleic anhydride or phthalic anhydride. It is preferred that the dicarboxylic acid is o-phthalic acid, isophthalic acid, tetrahydrophthalic acid and/or adipic acid.

According to the invention the alkyd resin is built up from 5—65% by weight and preferably 10—55% by weight of an aliphatic monocarboxylic acid having 5—18, and preferably 7—18 carbon atoms. As examples of suitable aliphatic monocarboxylic acids may be mentioned: valeric acid, heptanoic acid, 2-ethyl hexanoic acid, pelargonic acid, isononanoic acid, lauric acid, coconut oil fatty acid, tall oil fatty acid, stearic acid and branched fatty acids containing 18 carbon atoms. It is preferred that the monocarboxylic acid should be saturated. Moreover, it is preferred that the monocarboxylic acid should be branched. More particularly, use is made of 2-ethyl hexanoic acid or isononanoic acid. Optionally, use may be made of mixtures of 2 or more of the above-envisaged aliphatic monocarboxylic acids. In the preparation of the alkyd resin it is possible, if desired, for the aliphatic monocarboxylic acid to be employed as an ester thereof, with the alcohol being for instance a polyvalent alcohol such as glycerol. It is of course also possible to use mixtures of alkyd resins.

The weight avarage molecular weight of the alkyd resin may vary between wide limits, depending on the field of application envisaged, and may be in the range of, for instance, 800 to 100 000. The hydroxyl number of the alkyl resin is generally in the range of 5 to 200, and preferably in the range of 15 to 200; the acid number should be in the range of 0 to 120.

The alkyd resin may be prepared in any convenient manner, for instance by means of a solvent process, in which the water evolved in the reaction is removed azeotropically with, for instance, an organic solvent such as toluene or xylene, after which generally the volatile constituents are to the desired extent removed in vacuo. If desired, however, use may be made of the melting process, in

2

which the reaction takes place with evaporation of the reaction water in the absence of an organic solvent. As esterification catalyst may be used any suitable compound, for instance: sulphuric acid, p-toluene sulphonic acid, benzene sulphonic acid, naphthalene sulphonic acid and metal compounds, for instance: dibutyl tin oxide and dibutyl tin dilaurate.

Incorporation of the acryloyl groups and/or methacryloyl groups into the alkyd resin may be carried out in any convenient manner, for instance by esterification of an alkyd resin with the use of (meth)acrylic acid or, if desired, the corresponding acid chloride, which alkyd resin contains so many hydroxyl groups that the hydroxyl number of the unmodified alkyd resin is generally in the range of 25 to 410, and preferably 30 to 300. Esterification may take place in a suitable solvent, such as toluene or xylene, in the presence of an esterification catalyst. If desired, however, the alkyd resin forming starting compounds together with (meth)acrylic acid and/or the corresponding acid chloride thereof may be polymerized by condensation, so that the preparation of the alkyd resin may be effected in one step.

The alkyd resin according to the invention contains an ethylenic unsturation, caused by (meth)acryloyl groups, of 0,2 to 7 and preferably of 0,5 to 4 equivalents of double bonds per kg. In addition, the alkyd resin may still contain one or more other ethylenically unsaturated compounds, for instance: maleic acid, fumaric acid and tetrahydrophthalic acid. The radiation curable coating composition further contains one or more vinyl compounds, for instance in amounts of 20 to 400, and preferably 80 to 250 parts by weight per 100 parts by weight of the poyester resin containing acryloyl and/or methacryloyl groups. As examples of suitable vinyl compounds may be mentioned styrene, divinyl benzene, diallyl phthalate and acrylic or methacrylic esters of alcohols having 1 to 12 carbon atoms, such as methanol, ethanol, n-butanol, isobutanol, ethylene glycol, propylene glycol, 1,4-butane diol, 1,5-pentane diol, neopentyl glycol, 1,6-hexane diol, polyethylene glycol, glycerol, trimethylol ethane, trimethylol propane, pentaerythritol, 2,2-bis(4-hydroxycyclohexyl)-propane, 2,2-bis(p-phenylenoxy-ethanol)-propane and 2,2-bis(p-phenyleneoxy-2-propanol)-propane.

If desired, the radiation curable coating composition may contain one or more photoinitiators, for instance in the case where the coating composition is subjected to ultraviolet radiation. As examples of suitable photoinitiators may be mentioned aromatic carbonyl compounds such as benzophenone, acetophenone, diethoxyacetophenone, chlorothioxanthone, benzil, benzildimethyl ketal and benzoin and ethers thereof, such as the methyl ether, the ethyl ether, the propyl ether and the tert. butyl ether. It is preferred that use should be made of benzildimethyl ketal. If desired, also photosentizers and/or accelerators may be present. As suitable examples thereof may be mentioned Michler's ketone and amines such as tri-ethanolamine.

The coating composition may contain still other additives, if desired. As examples thereof may be mentioned polymers such as polyester resins, epoxy resins or polyacrylates, pigment dispersing agents, levelling agents, fillers, pigments, polymerization inhibitors such as hydroquinone, phenothiazine and/or copper, dyes and solvents.

Applying the coating composition to the desired substrate may be carried out in any convenient manner, for instance by brushing or rolling, spraying, sprinkling, flow-coating, dipping or by electrostatic spraying. The coating composition may with advantage be applied to a substrate of a synthetic material such as, polyalkylene, for instance polyethylene and polypropylene; polyethylene terephthalate and polybutylene terephthalate, and to substrates of metal such as tinplate and sheet steel. It is preferred that the composition should be applied to wood and wood-like materials such as core board, chip board, hardboard, veneer and paper.

Curing the composition according to the invention may be effected by subjecting it to ionizing radiation with ultraviolet light or a beam of accelerated electrons. As U.V.-radiation source may for instance serve a mercury-vapour or xenon lamp which operates at high, medium or low pressure. The beam of accelerated electrons is as a rule generated by using a potential difference in the range of 150 to 600 kV and a current in the range of 1 to 100 mA. The dose of radiation required for curing is normally within the range of 0,01 to 20 Mrad, and preferably 1 to 5 Mrad. The composition need be irradiated only for a fraction of a second to a few minutes in order to be sufficiently cured.

The invention will be illustrated but not limited by the following examples. In them the viscosity of the paint will be expressed in seconds of efflux time and determined with a Din Cup 4 at a temperature of 20°C. The viscosity mentioned in the Tables 1 and 2 is that of a 70% by weight solution of the final binder in hexane diol-1, 6-diacrylate and neopentyl glycol diacrylate, respectively. In the determination of the viscosity use is made of a Epprecht rotational viscometer and a temperature of 20°C and the viscosity is expressed in m Pa. s. The weight average molecular weight is determined with gel permeation chromatography. The parts are by weight, unless otherwise indicated.1,6-Hexane diol diacrylate is referred to as HDDA and neopentyl glycol diacrylate as NPGDA.

*Preparation of resins A—J*

The resins mentioned in Table 1 were obtained in a two-step process. In a reactor provided with a stirrer, a distillation column with water separator, a thermometer and a gas inlet tube the starting materials mentioned under "Composition first step" in Table 1 were admixed. The amounts mentioned in Table 1 are given in grammes. Subsequently, polycondensation was carried out in the usual manner with azeotropic water removal until a given acid number was reached. After the mixture had been cooled down, (meth)acrylic acid, the esterification catalyst, the solvent and a polymerization inhibitor were added as mentioned under "Composition second step" in Table 1. Next, the esterification reaction was carried out at a temperature between 115° and 130°C until the given acid number was reached. At conclusion of the reaction the solvent was removed by distillation in vacuo and the product obtained was mixed with the desired vinyl monomer.

TABLE 1

| Composition first step | Resin | | | | |
| --- | --- | --- | --- | --- | --- |
| | Comparison A | B | C | D | E |
| phthalic anhydride | 539,2 | 505,2 | 470,3 | 160,2 | — |
| adipic acid | — | — | — | — | — |
| maleic anhydride | — | — | — | — | — |
| succinic anhydride | — | — | — | — | 137,2 |
| neopentyl glycol | 364,4 | 310,6 | 258,1 | — | — |
| trimethylol propane | 104,0 | 142,7 | 179,8 | — | — |
| pentaerythritol | — | — | — | 280,3 | 325,1 |
| lauric acid. | — | — | — | 542,0 | — |
| heptanoic acid | — | — | — | — | 607,1 |
| isononanoic acid | — | 49,9 | 99,8 | — | — |
| valeric acid | — | — | — | — | — |
| benzoic acid | — | — | — | — | — |
| xylene | 39,0 | 39,0 | 39,0 | 38,1 | 40,1 |
| acid number of solid resin after 1st step (mg KOH /g) | 5,0 | 3,9 | 6,2 | 4,6 | 4,5 |

TABLE 1 (Continued)

| Composition first step | Resin | | | | |
|---|---|---|---|---|---|
| | F | Comparison G | H | I | J |
| phthalic anhydride | 253,8 | 226,6 | — | — | 192,2 |
| adipic acid | — | — | — | 223,7 | — |
| maleic anhydride | — | — | 164,2 | — | — |
| succinic anhydride | — | — | — | — | — |
| neopentyl glycol | — | — | — | — | — |
| trimethylol propane | — | — | 347,3 | — | — |
| pentaerythritol | 370,3 | 343,2 | — | 349,1 | 305,1 |
| lauric acid | — | — | 503,4 | — | — |
| heptanoic acid | — | — | — | 446,3 | — |
| isononanoic acid | — | — | — | — | 498,2 |
| valeric acid | 408,1 | — | — | — | — |
| benzoic acid | — | 441,3 | — | — | — |
| xylene | 38,2 | 38,3 | 39,2 | 37,7 | 38,2 |
| acid number of solid resin after 1st step (mg KOH /g) | 2,4 | 3,8 | 3,9 | 6,1 | 4,1 |

TABLE 1 (Continued)

| Composition second step | Resin | | | | |
|---|---|---|---|---|---|
| | Comparison A | B | C | D | E |
| toluene | 289,5 | 289,6 | 289,4 | 291,3 | 301,8 |
| p-toluene sulphonic acid | 6,7 | 6,7 | 6,7 | 6,7 | 7,0 |
| phenothiazine | 1,0 | — | — | — | 1,0 |
| hydroquinone | — | 1,0 | 1,0 | — | — |
| copper powder | — | — | — | 2,0 | — |
| acrylic acid | 77,7 | 77,8 | 77,7 | 111,9 | — |
| methacrylic acid | — | — | — | — | 91,4 |
| final acid number solid resin (mg KOH /g) | 6,4 | 5,8 | 7,2 | 7,4 | 28,5 |
| viscosity, 20°C (m Pa.s) 70% in HDDA 70% in NPGDA | 39500 124000 | — 85300 | — 37600 | 853 — | 216 — |
| weight average mol. weight | 3580 | 4080 | 4530 | 7300 | 3400 |
| equivalents of double bonds per kg as result of (meth)acryloyl groups | 1,04 | 1,03 | 1,04 | 1,42 | 0,44 |

**0 002 866**

TABLE 1 (Continued)

| Composition second step | Resin | | | | |
|---|---|---|---|---|---|
| | F | Comparison G | H | I | J |
| toluene | 296,2 | 292,7 | 290,3 | 85,2 | 290,4 |
| p-toluene sulphonic acid | 6,8 | 6,8 | 6,7 | 7,1 | 6,7 |
| phenothiazine | — | — | — | 1,0 | — |
| hydroquinone | 1,0 | 1,0 | 1,0 | — | 1,0 |
| copper powder | — | — | — | — | — |
| acrylic acid | 113,8 | 112,4 | 74,3 | — | 111,0 |
| methacrylic acid | — | — | — | 185,3 | — |
| final acid number solid resin (mg KOH /g) | 8,8 | 9,6 | 4,5 | 32,5 | 7,8 |
| viscosity, 20 °C (m Pa.s) 70% in HDDA | 2950 | $\gg 10^5$ | 524 | 458 | — |
| 70% in NPGDA | — | — | — | — | 4550 |
| weight average mol. weight | 6600 | 6100 | 7900 | 4200 | 4600 |
| equivalents of double bonds per kg as a result of (meth)acryloyl groups | 1,40 | 1,36 | 0,98 | 1,29 | 1,40 |

*Preparation of resins K and L*

The resins mentioned in Table 2 were obtained by polycondensation in one step of all the starting materials given in the table. In a similar reactor as used in the preparation of the resins A—J the starting materials, the solvent, the esterification catalyst and a polymerization inhibitor were admixed, after which the reaction was carried out at a temperature in the range of 115° to 135°C., with azeotropic water separation, until the given acid number was reached. At conclusion of the reaction the solvent was removed by distillation in vacuo, and the product obtained was mixed with the desired vinyl monomer.

TABLE 2

| Composition | Resin | |
|---|---|---|
| | K | L |
| adipic acid | 320,4 | 244,8 |
| trimethylol propane | 405,8 | — |
| pentaerythritol | — | 309,1 |
| heptanoic acid | 307,4 | 484,3 |
| acrylic acid | 117,2 | 119,2 |
| toluene | 291,3 | 290,6 |
| hydroquinone | 1,0 | — |
| phenothiazine | — | 1,0 |
| p-toluene sulphonic acid | 6,7 | 6,7 |
| final acid number solid resin (mg KOH /g) | 3,7 | 12,4 |
| viscosity, 20°C (in m Pa.s) 70% in HDDA | 1010 | 1900 |
| weight average mol. weight | 24000 | 42000 |
| eq. double bonds per kg | 1,47 | 1,44 |

Example 1

From the alkyd resins B and C and the reference polyester A white flow-coat paints were prepared by dissolving the resins in NPGDA and dispersing titanium dioxide in the resin solution with the aid of a ball mill, so that finally there were present 30 parts by weight of titanium dioxide to 100 parts by weight of solid resin. The total amounts of NPGA required to dilute 100 parts of solid resin until the application viscosity of 40 seconds had been reached were 198, 184 and 170 parts for the resins A, B and C, respectively, it being found that unlike the resins B and C the reference resin A was difficult to dissolve. The respective resins were applied to filled hardboard panels to a layer thickness of about 70 $\mu$m. The paint was cured by means of accelerated electrons using a dose of 2 Mrad. At the radiation apparatus employed this meant the use of an acceleration voltage of 300 kV and a current of 40 mA at a feed rate of 25 metres per minute. During curing the paint film was in an inert atmosphere having an oxygen content of less than 50 ppm. After having been rubbed 100 times with a wad soaked in methyl ethyl ketone (so-called MEK rubs) the hardness of the coatings obtained had decreased only very little. The coating composition based on the reference resin A displayed a bad flow and an irregular and poor appearance. The flow of the coating composition based on the alkyd resin B was somewhat better, and the alkyd resin C showed distinctly better levelling and moreover had a more regular and less poor appearance than the reference polyester A.

8

## Example 2

The alkyd resin D was diluted to a viscosity of 40 seconds with 83 parts of HDDA per 100 parts of solid alkyd resin. For the reference polyester A 160 parts of HDDA per 100 parts of solid resin has to be used to obtain the same viscosity. Moreover, unlike the alkyd resin D, it was difficult to dissolve, whereas, as 70% by weight solution in HDDA, the reference resin A showed a far higher viscosity than resin D. The resulting clear paint based on alkyd resin D and obtained in the above-indicated way was applied to veneered chipboard to a layer thickness of about 40 $\mu$m by means of a roller, after which the paint was cured with accelerated electrons using a dose of 4 Mrad. The paint film obtained displayed very good levelling and body and the surface was entirely free from craters or other irregularities.

## Example 3

The alkyd resin E was diluted to a viscosity of 40 seconds with only 45 parts of HDDA per 100 parts of solid resin. The paint thus obtained was applied to a veneered chipboard to a layer thickness of about 80 $\mu$m by means of a curtain-coating machine. The paint was cured with accelerated electrons using a dose of 5 Mrad. The paint film obtained was perfectly free from craters.

## Example 4

From the alkyd resin F a white flow-coat paint was prepared in the same way as indicated in Example 1, except that the resin was diluted with 104 parts of HDDA per 100 parts of solid resin to obtain an application viscosity of 40 seconds. The paint was applied to filled chipboard to a layer thickness of about 60 $\mu$m. The paint film was cured with accelerated electrons. Using a dose of 1 Mrad a very good hardness and resistance to methyl ethyl ketone was obtained. The resulting film displayed excellent levelling and had no surface defects.

For comparison use was made of a resin G which, unlike the alkyd resin F, was modified with an aromatic monocarboxylic acid. The reference resin showed an extremely high viscosity upon dilution with HDDA (see Table 1). The resin G was processed into a paint in the same manner as the alkyd resin F, 161 parts of HDDA being needed per 100 parts of solid resin to obtain an application viscosity of 40 seconds. The paint was applied and cured as indicated in the first half of this example, but in contrast to the paint according to the invention it displayed very poor levelling and an irregular surface with craters.

## Example 5

From the alkyd resin F a clear paint was prepared by dissolving 100 parts of solid resin in 189 parts of diethylene glycol diacrylate, so that a viscosity of 25 seconds was obtained. To 100 parts of this paint there were added: 7 parts of benzophenone and 6 parts of triethanolamine. The paint was applied to tin plate to a layer thickness of about 30 $\mu$m with the aid of a bar wound with wire. The paint was cured with the use of a Philips HOK 5 UV-lamp having a slit width of 7 cm and a curing speed of 4 metres per minute. The film displayed particularly good levelling and body and had no surface defects. the film showed a very good combination of hardness and flexibility.

## Example 6

The alkyd resin H was diluted to a viscosity of 40 seconds with 74 parts of HDDA. The clear paint was applied to veneered fibre board to a layer thickness of 65 $\mu$m with the aid of a curtain-coating machine. The paint was cured with accelerated electrons at a dose of 4 Mrad. The cured film had a very attractive surface and a good resistance to solvents (over 100 MEK rubs; see Example 1).

## Example 7

A white paint based on alkyd resin I and HDDA and pigmented with 50 parts of titanium dioxide per 100 parts of solid alkyd resin, and having a viscosity of 70 seconds, was applied to stopped hardboard panels to a layer thickness of 30 $\mu$m by means of a roller. The paint film was cured with accelerated electrons, the use of a dose of 3 Mrad leading to good hardness and resistance to solvents. The paint displayed a good body and a favourable appearance.

## Example 8

From the alkyd resin J a white flow-coat paint was prepared as indicated in Example 1. The paint was diluted to a viscosity of 40 seconds with NPGDA and showed no tendency to precipitation of the pigment. The paint was applied to stopped chipboard to a layer thickness of about 80 $\mu$m by means of a curtain-coating machine. After the paint had been cured by means of accelerated electrons at a dose of 1 Mrad, a very good looking and solvent resistant film was obtained having a good hardness. The film displayed a good body and was entirely free from craters and other surface irregularities.

## Example 9

The alkyd resin K was diluted to a viscosity of 70 seconds with HDDA and subsequently applied to printed paper to a layer thickness of 10 $\mu$m with the aid of a roller. Next, the paint film was cured with aid of accelerated electrons. Using a dose of 1 Mrad led to a completely cured coating resistant to solvents.

## Example 10

The alkyd resin L was diluted to a viscosity of 40 seconds with HDDA. The clear paint thus obtained was subsequently applied to veneered chipboard to a layer thickness of 80 $\mu$m by means of a curtain-coating machine, after which the paint was cured with accelerated electrons at a dose of 4 Mrad. The cured film had a very attractive high gloss, and very good levelling and did not show any surface defects. Nor did the paint show any tendency to sink into the substrate.

## Claims

1. A process for coating a substrate by applying to it a radiation curable coating composition based on an acryloyl groups- and/or methacrylol groups- containing polyester resin and a vinyl monomer and curing said composition by ionizing radiation, characterized in that the polyester resin is built up from 5—65% by weight of an aliphatic monocarboxylic acid having 5—18 carbon atoms and contains an ethylenic unsaturation, provided by acryloyl and/or methacryloyl groups, of 0,2 to 7 equivalents of double bonds per kilogramme.

2. A process according to claim. 1, characterized in that the polyester resin is built up from 10—55% by weight of an aliphatic monocarboxylic acid.

3. A process according to claim 1 or 2, characterized in that the aliphatic monocarboxylic acid contains 7—18 carbon atoms.

4. A process according to any one of the claims 1—3, characterized in that the aliphatic monocarboxylic acid is saturated.

5. A process according to any one of the claims 1—4, characterized in that the aliphatic monocarboxylic acid is branched.

6. A process according to any one of the claims 1—5, characterized in that the composition contains 80—250 parts by weight of one or more vinyl compounds per 100 parts by weight of the poyester resin containing acryloyl and/or methacryloyl groups.

## Revendications

1. Procédé pour revêtir un substrat par application sur celui-ci d'une composition durcissable à la radiation, formée à base d'une résine polyester contenant des groupements acryloyles et/ou des groupements méthacryloyles et d'un monomère vinylique, et durvissement de ladite composition par radiation ionisante, caractérise en ce que la résine polyester a été formée à partir de 5—65% en poids d'un acide monocarboxylique aliphatique à 5—18 atomes de carbone et contient une insaturation éthylénique, fournie par des groupements acryloyles et/ou méthacryloyles, à 0,2—7 équivalents de doubles liaisons par kilogramme.

2. Procédé selon la revendication 1, caractérisé en ce que la résine polyester a été formée à partir de 10—55% en poids d'un acide monocarboxylique aliphatique.

3. Procédé selon la revendication 1 ou 2, caractérisé .en ce que l'acide monocarboxylique aliphatique contient 7—18 atomes de carbone.

4. Procédé selon l'une quelconque des revendications 1—3, caractérisé en ce que l'acide monocarboxylique aliphatique est saturé.

5. Procédé selon l'une quelconque des revendications 1—4, caractérisé en ce que l'acide monocarboxylique aliphatique est ramifié.

6. Procédé selon l'une quelconque des revendications 1—5, caractérisé en ce que la composition contient 80—250 parties d'un ou plusieurs composés vinyliques par 100 parties en poids de la résine polyester contenant des groupements acryloyles et/ou méthacryloyles.

## Patentansprüche

1. Verfahren zur Beschichtung eines Substrats durch Auftragen eines strahlungshärtbaren Überzugsmittels auf der Basis eines Acryloyl und/oder Methacryloylgruppen enthaltenden Polyesterharzes sowie eines Vinylmonomers und durch Härtung dieses Mittels unter Verwendung von ionisierender Strahlung, dadurch gekennzeichnet, dass das Polyesterharz zu 5—65 Gewichtsprozent aus einer aliphatischen Monocarbonsäure mit 5—18 Kohlenstoffatomen aufgebaut ist und eine äthylenische Unsättigung wegen Acryloyl- und/oder Methacryloylgruppen in Höhe von 0,2 bis 7 Äquivalenten Doppelbindungen je Kilogramm enthält.

2. Verfahren gemäss Anspruch 1, dadurch gekennzeichnet, dass die Polyesterharz zu 10—55 Gewichtsprozent aus einer aliphatischen Monocarbonsäure aufgebaut ist.

3. Verfahren gemäss Anspruch 1 oder 2, dadurch gekennzeichnet, dass die aliphatische Monocarbonsäure 7—18 Kohlenstoffatome enthält.

4. Verfahren gemäss einem der Ansprüche 1—3, dadurch gekennzeichnet, dass die aliphatische Monocarbonsäure gesättigt ist.

5. Verfahren gemäss einem der Ansprüche 1—4, dadurch gekennzeichnet, dass die aliphatische Monocarbonsäure verzweigt ist.

**0 002 866**

6. Verfahren gemäss einem der Ansprüche 1—4, dadurch gekennzeichnet, dass das Uberzugsmittel 80—250 Gewichtsteile eine oder mehrerer Vinylverbindungen je 100 Gewichtsteile- des Acryloyl- und/oder Methacryloylgruppen enthaltenden Polyesterharzes enthält.